# EUROPÄISCHE PATENTANMELDUNG

(11) **EP 4 495 419 A1**
(43) Veröffentlichungstag der Anmeldung: **22.01.2025**
(21) Anmeldenummer: 23186809.2
(22) Anmeldetag: 20.07.2023
(51) Int. Cl.: F03D 13/20, F03D 80/50, E04H 12/16

(54) **VERFAHREN ZUM DURCHFÜHREN VON WARTUNGSARBEITEN IM INNEREN EINES TURMS EINER WINDENERGIEANLAGE**

(71) Anmelder: Wobben Properties GmbH, 26607 Aurich (DE)
(72) Erfinder: Kurlvink, Markus, 26810 Westoverledingen (DE); Gottschalk, Lars, 39175 Gerwisch (DE)
(74) Vertreter: Eisenführ Speiser

(57) **Zusammenfassung**

Die Erfindung betrifft ein Verfahren (300) zum Durchführen von Wartungsarbeiten im Inneren eines Turms (1) einer Windenergieanlage, wobei der Turm (1) eine Turmwand (2) aufweist, und mindestens ein innen an der Turmwand (2) entlang verlaufendes, unter Zugspannung stehendes Spannelement (3) aufweist. Erfindungsgemäß umfasst das Verfahren ein Bereitstellen (301) einer Abhebewerkzeuganordnung (200), die dazu eingerichtet ist, das Spannelement (3) in einem Wartungsbereich (7) relativ zu der Turmwand (2) zu bewegen und, während das Spannelement (3) unter Zugspannung steht, die Schritte: a) Ansetzen (303) der Abhebewerkzeuganordnung (200) in dem Wartungsbereich (7) an dem Spannelement (3), wobei das Spannelement (3) einen ersten Abstand (A₁) relativ zur Turmwand (2) einnimmt, b) Fortbewegen (305) des Spannelements von der Turmwand (2) mittels der Abhebewerkzeuganordnung (200), so dass das Spannelement (3) einen zweiten Abstand (A₂) relativ zur Turmwand (2) einnimmt, der größer ist als der erste Abstand (A₁), c) Durchführen (307) der Wartungsarbeit im Wartungsbereich (7), während die Abhebewerkzeuganordnung (200) das Spannelement (3) in dem zweiten Abstand (A₂) hält, und d) Zurückbewegen (309) des Spannelements (3) in den ersten Abstand (A₁) zu der Turmwand (2) mittels der Abhebewerkzeuganordnung (200) im Anschluss an die Wartungsarbeit.

## Beschreibung

Die vorliegende Erfindung betrifft ein Verfahren zum Durchführen von Wartungsarbeiten im Inneren eines Turms einer Windenergieanlage, wobei der Turm eine Turmwand aufweist, und mindestens ein innen an der Turmwand entlang verlaufendes, unter Zugspannung stehendes Spannelement aufweist.

Die Türme von Windenergieanlagen werden zur Stabilisierung üblicherweise mit längs entlang des Turms verlaufenden Spannelementen stabilisiert. Als Spannelemente kommen häufig Spannsysteme zum Einsatz, die endseitig einerseits am Turm und andererseits am Fundament verankert werden und unter Zugspannung den Turm gegen seitliche Verwindung schützen. Es ist im Laufe der Lebenszeit der Windenergieanlage notwendig, im Inneren des Turms Wartungsarbeiten durchzuführen. Die an der Turmwand entlanglaufenden Spannelemente sind aufgrund der an ihnen anliegenden Zugspannung in der Regel sehr starr und lassen sich nicht ohne Weiteres bewegen. In Fällen, in denen Wartungsarbeiten an den Spannelementen oder in unmittelbarer Nähe der Spannelemente durchgeführt werden müssen, müssen die Spannelemente bewegt werden, um die Wartungsarbeit durchführen zu können.

Im Stand der Technik wird dieses Problem in der Regel dadurch adressiert, dass die jeweiligen Spannelemente entspannt werden, da dann zur Seite bewegt werden, um die Wartungsarbeit durchführen zu können, und im Anschluss an den Wartungseinsatz erneut an den entsprechenden Ankerelementen verspannt werden. Der hierfür notwendige Arbeitsaufwand ist beträchtlich und wird daher insgesamt als verbesserungswürdig angesehen.

Demzufolge lag der Erfindung die Aufgabe zugrunde, ein Verfahren der eingangs bezeichneten Art anzugeben, bei dem gefahrlos Wartungsarbeiten im Wartungsbereich an den Spannelementen oder in der Nähe der Spannelemente durchgeführt werden können, bei dem die vorstehend beschriebenen Nachteile möglichst weitgehend überwunden werden. Insbesondere lag der Erfindung die Aufgabe zugrunde, ein solches Verfahren anzugeben, bei dem die Wartungsarbeiten mit reduziertem Arbeits- und Zeitaufwand durchgeführt werden können.

Die Erfindung löst die ihr zugrundeliegende Aufgabe bei einem Verfahren der eingangs bezeichneten Art, indem das Verfahren die Schritte umfasst:
Bereitstellen einer Abhebewerkzeuganordnung, die dazu eingerichtet ist, das Spannelement in einem Wartungsbereich relativ zu der Turmwand zu bewegen, und während das Spannelement unter Zugspannung steht:
a) Ansetzen der Abhebewerkzeuganordnung in dem Wartungsbereich an dem Spannelement, wobei das Spannelement einen ersten Abstand relativ zur Turmwand einnimmt,
b) Fortbewegen des Spannelements von der Turmwand mittels der Abhebewerkzeuganordnung, so dass das Spannelement einen zweiten Abstand relativ zur Turmwand einnimmt, der größer ist als der erste Abstand,
c) Durchführen der Wartungsarbeit im Wartungsbereich, während die Abhebewerkzeuganordnung das Spannelement in dem zweiten Abstand hält, und
d) Zurückbewegen des Spannelements in den ersten Abstand zu der Turmwand mittels der Abhebewerkzeuganordnung im Anschluss an die Wartungsarbeit.

Die Erfindung macht sich die Erkenntnis zugrunde, dass es mittels der Abhebewerkzeuganordnung wider Erwarten möglich ist, das Spannelement von der Turmwand wegzubewegen, ohne dass es hierfür entlastet werden muss. Die seitliche Auslenkung senkrecht zur Turmwand ist aufgrund der hohen Turmlänge im Verhältnis zur Länge des Spannelements gering, sodass die dadurch in Kauf zu nehmende zusätzliche Längung kein Versagen des Spannelements zur Folge hat. Mit der Erkenntnis, dass es zum Durchführen der Wartungsarbeit ausreicht, das Spannelement im Wartungsbereich auf den zweiten Zustand, gewissermaßen von der Turmwand abzuheben, ohne das Spannelement zu entspannen, wird ein erheblicher Zeitaufwand beim Durchführen der Wartungsarbeit erzielt.

In einer vorteilhaften Weiterbildung weist die Abhebewerkzeuganordnung ein erstes Abhebewerkzeug und ein zweites Abhebewerkzeug auf, und der Wartungsbereich erstreckt sich um ein Wartungsobjekt herum. Der Schritt a) umfasst hierbei ferner: Ansetzen des ersten Abhebewerkzeugs auf einer ersten Seite des Wartungsobjekts, sowie Ansetzen des zweiten Abhebewerkzeugs auf einer zu der ersten Seite gegenüberliegenden zweiten Seite des Wartungsobjekts. Unter dem Wartungsbereich wird erfindungsgemäß somit ein Längenbereich des Spannelements in Richtung des Spannelements verstanden, und das Wartungsobjekt wird erfindungsgemäß verstanden als eine Anordnung von einem oder mehreren Teilen, die sich im Wartungsbereich entlang des Spannelements im Inneren des Turms befinden.

Wartungsobjekte sind insbesondere Teile des Spannsystems, wie etwa Unterkonstruktionen, die das Spannelement abstützen. Dazu gehören beispielsweise Umlenkelemente wie Umlenksättel, an denen das Spannelement im gespannten Zustand anliegt, und die das Spannelement unter Aufbringen einer entsprechenden Reaktionskraft von der Turmwand abhalten.

Das Wartungsobjekt kann erfindungsgemäß aber auch Teil des Spannelements selbst sein, etwa ein Schutzmantel des Spannelements oder eine Korrosionsschutzfüllung im Inneren des Spannelements. Das Spannelement selbst ist erfindungsgemäß vorzugsweise ein Litzenbündel, eine Einzellitze oder ein Drahtspannglied. Indem das Spannelement mittels der beiden Abhebewerkzeuge beidseitig des Wartungsobjekts von der Turmwand weiter beabstandet wird, wird die Belastung auf das Spannelement besser verteilt, was das Spannelement schont und die Sicherheit für die durchzuführende Wartungsarbeit erhöht.

In einer weiteren bevorzugten Ausführungsform weisen das erste Abhebewerkzeug und das zweite Abhebewerkzeug jeweils einen Abstand zu dem Wartungsobjekt auf, vorzugsweise in einem Bereich von 20 cm oder mehr, weiter bevorzugt in einem Bereich von 30 cm oder mehr, und besonders bevorzugt in einem Bereich von 35 cm bis 45 cm jeweils vom Wartungsobjekt. Hierdurch wird ein vorteilhafter Kompromiss zwischen der vorzunehmenden Ausnehmung des Spannelements relativ zur Turmwand einerseits und dem hierdurch bereitgestellten Bewegungsspielraum im Wartungsbereich für das Wartungsobjekt andererseits geschaffen.

In einer weiteren bevorzugten Ausführungsform, in der das Wartungsobjekt eine Unterkonstruktion für das Spannelement ist, insbesondere ein Umlenkelement wie etwa ein Umlenksattel, an welchem das Spannelement in dem ersten Abstand anliegt, und von dem das Spannelement im zweiten Abstand abgehoben ist, umfasst Schritt c) ferner das Inspizieren, Instandsetzen und/oder Austauschen der Unterkonstruktion.

Vorzugsweise ist der Umlenksattel das Wartungsobjekt und der Schritt c) umfasst: Überprüfung des Umlenksattels auf Verformung und Vorhandensein von Brüchen, und/oder Austauschen des Umlenksattels im Fall eines Bruchs.

In einer weiteren bevorzugten Ausführungsform, in welcher das Wartungsobjekt ein Schutzmantel des Spannelements ist, umfasst der Schritt c): Inspizieren und/oder Instandsetzen des Schutzmantels, wobei vorzugsweise das Inspizieren umfasst: Überprüfung des Schutzmantels des Spannelements auf schadhafte Stellen, und/oder das Instandsetzen im Fall der Identifikation umfasst: Versiegelung der schadhaften Stelle. Der Schutzmantel des Spannelements ist vorzugsweise ein Polymermantel, etwa ein Polyethylen-Schutzmantel. Der Schutzmantel kann beispielsweise gemäß EAD 160004-00-0301 Absatz 2.2.4 bis 2.2.26 sein.

In einer weiteren bevorzugten Ausführungsform, in der das Wartungsobjekt eine Korrosionsschutzfüllung des Spannelements ist, umfasst Schritt c) ferner: Inspizieren und/oder Instandsetzen der Korrosionsschutzfüllung, wobei vorzugsweise der Schritt des Inspizierens umfasst: Überprüfung des Spannelements auf Austritt der Korrosionsschutzfüllung und/oder der Schritt des Instandsetzens umfasst: Auffüllen der Korrosionsschutzfüllung. Als Korrosionsschutzfüllung kommen beim Spannelement insbesondere ein Wachs, Vaseline oder ein Fett in Betracht. Diese können beispielsweise gemäß EAD 160027-00-0301 ausgewählt sein. Alternativ könnte als Korrosionsschutzfüllung ein Werkstoff ausgewählt werden gemäß der Leitlinie für die europäische Zulassung für Bausätze zur Vorspannung von Tragwerken vom 22.5.2006, ETAG 013, , herausgegeben im Bundesanzeiger durch das Bundesministerium der Justiz der Bundesrepublik Deutschland, Jahrgang 59, Nr. 162a, ISSN 0720-6100, vgl. dort insbesondere vgl. dort Anlage C4.1 für Fette oder C4.2 für Wachs.

In einerweiteren bevorzugten Ausführungsform weist das Abhebewerkzeug, insbesondere das erste und/oder zweite Abhebewerkzeug der Abhebewerkzeuganordnung, ein druckbeaufschlagbares Fluidkissen auf, welches dazu eingerichtet ist, mittels Druckbeaufschlagung in einen partiell oder vollständig entleerten ersten Zustand und einen partiell oder vollständig befüllten zweiten Zustand gebracht zu werden. Diesbezüglich macht sich die Erfindung zunutze, dass mit dem Befüllen des Fluidkissens dessen Volumen steigt. Das steigende Volumen führt bei dem Fluidkissen bei entsprechender Anordnung relativ zum Spannelement zu einer Ausdehnung relativ zur Turmwand, mittels derer das Spannelement dann von der Turmwand wegbewegt werden kann. Die vorstehend bezeichneten druckbeaufschlagbaren Fluidkissen haben den Vorteil, dass sie mittels entsprechender Steuertechnik, die allgemein erhältlich ist, sehr zuverlässig angesteuert werden können und auch der Fluiddruck recht genau gesteuert werden kann. Aufgrund der Formnachgiebigkeit des Fluidkissens ist es besonders bevorzugt, das Fluidkissen zwischen das Spannelement und die Turmwand einzuführen beim Schritt des Ansetzens. Das Fluidkissen kann in dieser Konstellation während des Befüllens das Spannelement wie ein Kissen einbetten und somit eine Auslenkung des Spannelements weg von der Turmwand bewirken, bei der gleichzeitig die Oberfläche des Spannelements vor Beschädigung geschützt wird. Die fluidtechnische Betätigung des Abhebens von der Turmwand ist somit zugleich eine kraftvolle und schonende Art, das Spannelement auszulenken.

Unter Verwendung des druckbeaufschlagten Fluidkissens wird das Verfahren damit vorteilhaft weitergebildet, dass der Schritt b) umfasst: Befüllen des Fluidkissens, sodass sich das Spannelement dem zweiten Abstand annähert, und/oder der Schritt d) umfasst: Entleeren des Fluidkissens, sodass sich das Spannelement wieder dem ersten Abstand annähert. Vorzugsweise nähern sich die Spannelemente dem jeweiligen Abstand an und erreichen ihn, wo sie dann für die Durchführung der Wartungsarbeit mittels Aufrechthaltung des Fluiddrucks gehalten werden.

In einer weiteren bevorzugten Ausführungsform ist das Fluidkissen ein pneumatisches Hebekissen, vorzugsweise mit einer Einschubhöhe im ersten Zustand von 3 cm oder weniger, und/oder mit einem maximalen Hub in einem Bereich von 20 cm oder mehr, vorzugsweise 50 cm oder mehr. Pneumatische Hebekissen der vorstehend bezeichneten Art sind allgemein erhältlich und haben ihre Zuverlässigkeit in vielen industriellen Anwendungen unter Beweis stellen können. Ihr Betrieb ist handwerklich leicht beherrschbar und sicher, was auch dem erfindungsgemäßen Verfahren zum Vorteil gereicht.

Die vorstehend beschriebenen pneumatischen Hebekissen eignen sich besonders für Situationen, in denen die Spannelemente sehr eng an der Turmwand innerhalb der Windenergieanlage geführt werden. Es gibt allerdings auch Installationen, bei denen die Spannelemente in höheren Abständen entlang der Turmwand verlaufen. In einer weiteren bevorzugten Ausführungsform, in welcher das Spannelement mittels eines oder mehrerer an der Turmwand angeordneter tragender Vorsprünge in einem Abstand zur Turmwand geführt ist, der in einen Bereich von 20 cm oder mehr, liegt, vorzugsweise 30 cm bis 50cm, besonders bevorzugt über 50 cm liegt, ist das Abhebewerkzeug, insbesondere das erste und/oder zweite Abhebewerkzeug, der Abhebewerkzeuganordnung ein hydraulisch betätigter Hubzylinder, beispielsweise ein einfach oder doppelt wirkender Hydraulikstempel mit ausgeformter Unterkonstruktion zum Abheben des Spannelements, oder ein mechanisch betätigtes Werkzeug. In diesen Ausführungsformen macht sich die Erfindung zunutze, dass der Abstand zwischen Spannelement und Turmwand von vornherein größer ist, sodass alternativ zur Verwendung von pneumatisch betätigten Hubkissen auch die vorstehend bezeichneten Abhebewerkzeuge zum Einsatz gebracht werden können.

Als tragender Vorsprung kommen an der Turmwand insbesondere Konsolen, Konsolbänder oder ähnliche Strukturelemente in Betracht.

In bevorzugten Ausführungsformen des Verfahrens ist der Turm der Windenergieanlage ein Betonturm, insbesondere ein aus Fertigbetonteilen gebildeter Turm, und das Spannelement ist Teil eines externen Spannsystems, insbesondere Litzen- oder Drahtspannsystems, bei dem die Spannelemente relativ zur Turmwand extern, innerhalb des Turms, gespannt werden. Das Spannsystem ist vorzugsweise ein Litzenspannsystem gemäß bauaufsichtlicher Zulassung, etwa ETA (European Technical Assessment).

Die Erfindung wurde vorstehend in einem ersten Aspekt betreffend das Verfahren zur Durchführung von Wartungsarbeiten beschrieben. In einem zweiten Aspekt betrifft die Erfindung ferner die Verwendung eines pneumatischen Hebekissens in einer Abhebewerkzeuganordnung zum Durchführen von Wartungsarbeiten im Inneren eines Turms einer Windenergieanlage, wobei der Turm eine Turmwand aufweist, und mindestens ein innen an der Turmwand entlang verlaufendes, unter Zugspannung stehendes Spannelement. Die Erfindung löst die eingangs bezeichnete Aufgabe bei einer solchen Verwendung, indem das pneumatische Hebekissen verwendet wird, um das Spannelement in einem Wartungsbereich von einem ersten Abstand relativ zu der Turmwand in einen zweiten Abstand von der Turmwand zu bringen, der größer ist als der erste Abstand, während das Spannelement unter Zugspannung steht.

Die Erfindung macht sich bezüglich diesem Aspekt die gleichen Vorteile zunutze wie das erfindungsgemäße Verfahren des ersten Aspekts. Bevorzugte Ausführungsformen des erfindungsgemäßen Verfahrens sind zugleich bevorzugte Ausführungsformen der Verwendung und umgekehrt, weswegen zur Vermeidung von Wiederholungen auf die vorstehenden Ausführungen verwiesen wird. Das pneumatische Hebekissen gemäß dem zweiten Aspekt wird vorzugsweise in einem Verfahren nach einer der vorstehend beschriebenen bevorzugten Ausführungsformen verwendet.

Die Erfindung wird nachfolgend unter Bezugnahme auf die beigefügten Figuren anhand eines bevorzugten Ausführungsbeispiels näher beschrieben. Hierbei zeigen:
- Fig. 1: eine schematische Detailansicht eines Windenergieanlagenturms gemäß eines bevorzugten Ausführungsbeispiel,
- Fig. 2: die Ansicht aus Fig. 1 in einem weiteren Verfahrungszustand,
- Fig. 3: die Ansicht der Figuren 1 und 2 in einem weiteren Verfahrungszustand,
- Fig. 4: die Ansicht der Figuren 1 bis 3 in einem weiteren Verfahrungszustand, und
- Fig. 5: ein schematisches Fließbild des erfindungsgemäßen Verfahrens gemäß einem bevorzugten Ausführungsbeispiel.

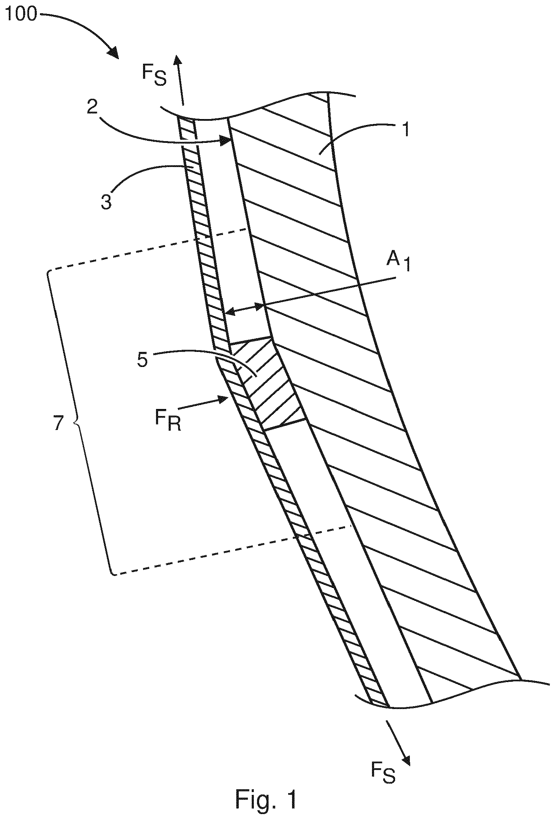

In Fig. 1 ist ein Teil einer Windenergieanlage 100 dargestellt. Die Windenergieanlage 100 weist einen Turm 1 auf, in dem ein oder mehrere Spannelemente 3, beispielsweise ausgeführt als Spannlitzenbündel oder Einzellitzen, angeordnet sind. Sofern im Folgenden unter Verweis auf die Figuren im Singular von einem Spannelement 3 die Rede ist, so ist hierunter auch zu verstehen, dass es erfindungsgemäß mehrere weitere Spannelemente geben kann, mit denen im Bedarfsfall ähnlich verfahren wird wie hier beschrieben.

Das Spannelement 3 ist im Turm 1 der Windenergieanlage 100 verspannt, und es wirkt auf das Spannelement 3 eine Spannkraft Fs. Das Spannelement 3 steht damit unter Zugspannung. Das Spannelement 3 ist in Fig. 1 in einem ersten Abstand A₁ zum Turm 1 der Windenergieanlage 100 angeordnet. An dem Turm 1 ist innenseitig ein Wartungsobjekt 5 angeordnet, an dem das Spannelement 3 anliegt und mit einer seitlichen Kraft F_{R} auf das Wartungsobjekt 5 drückt.

Das Wartungsobjekt 5 ist im illustrierten Ausführungsbeispiel ein Umlenkelement in Form eines Umlenksattels, kann aber auch eine andere Art Unterkonstruktion für das Spannelement 3 darstellen.

Um das Wartungsobjekt 5 herum ist ein Wartungsbereich 7 definiert, der sich entlang des Spannelements 3 von dem Wartungsobjekt 5 aus erstreckt.

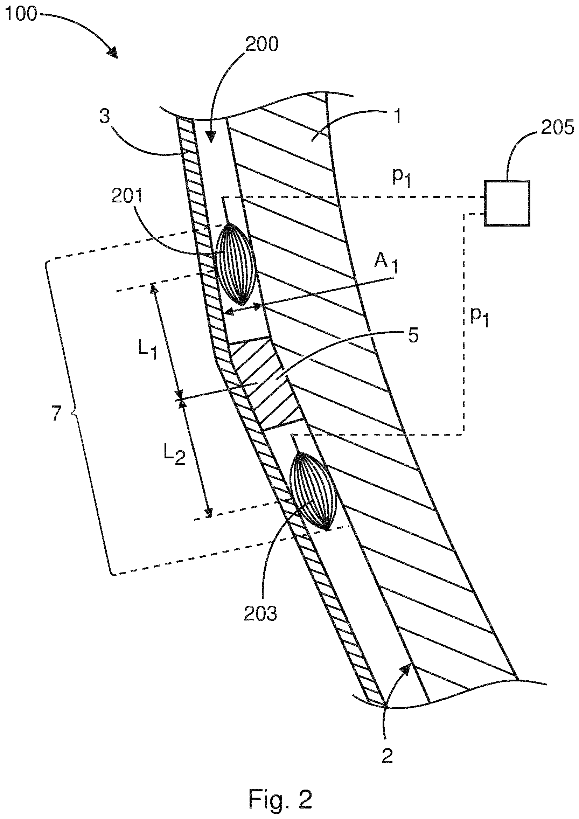

In der Situation gemäß Fig. 2 ist zusätzlich zu den Elementen in der Fig. 1 eine Abhebewerkzeuganordnung 200 angeordnet. Bei der in den Figuren überzeichnet dargestellten Turmgeometrie ist es vorteilhaft, dass die Abhebewerkzeuganordnung 200 ein erstes Abhebewerkzeug 201 und ein zweites Abhebewerkzeug 203 aufweist. Abhängig von der Turmgeometrie kann es aber in nicht dargestellten, ebenso bevorzugten Ausführungsbeispielen auch genügen, wenn die Abhebewerkzeuganordnung 200 nur ein einzelnes Abhebewerkzheug 201 oder 203 aufweist.

Die Abhebewerkzeuganordnung des gezeigten Ausführungsbeispiels weist ein Steuergerät 205 auf, welches mit den beiden Abhebewerkzeugen 201, 203 verbunden ist. Das Steuergerät 205 ist dazu eingerichtet, die Abhebewerkzeuge 201, 203 anzusteuern. Im gezeigten Ausführungsbeispiel sind die beiden Abhebewerkzeuge 201, 203 als druckbeaufschlagbare Fluidkissen ausgebildet, die jeweils mit einem Druck p₁ beaufschlagt sind, oder drucklos sind, d.h. dass p₁ in diesem Zustand gleich dem Umgebungsdruck sein kann. Vorzugsweise sind die Fluidkissen pneumatische Hebekissen.

Das erste Abhebewerkzeug 201 ist in einem ersten Abstand L₁ zum Wartungssubjekt 5 entlang des Spannelements 3 angeordnet, und das zweite Abhebewerkzeug 203 ist in entgegengesetzter Richtung entlang des Spannelements 3 in einem Abstand L₂ vom Wartungsobjekt 5 angeordnet. Die Abhebewerkzeuge 201, 203 sind innerhalb des Wartungsbereichs 7 angeordnet, beziehungsweise definieren den Wartungsbereich 7. Bei einem höheren Abstand der Abhebewerkzeuge 201, 203 vom Wartungsobjekt 5 würde der Wartungsbereich 7 entsprechend vergrößert. Im gezeigten Ausführungsbeispiel sind die Abstände L₁ und L₂ in etwa gleich groß, sie müssen allerdings nicht zwingend gleich groß sein.

Die Abhebewerkzeuganordnung 200 ist an das Spannelement 3 angesetzt worden, indem die beiden Abhebewerkzeuge 201, 203 in einen Spalt zwischen dem Spannelement 3 und dem Turm 1 eingeführt wurden, wobei sich das Spannelement 3 im Wartungsbereich 7 immer noch in dem ersten Abstand A₁ zum Turm 1 befindet.

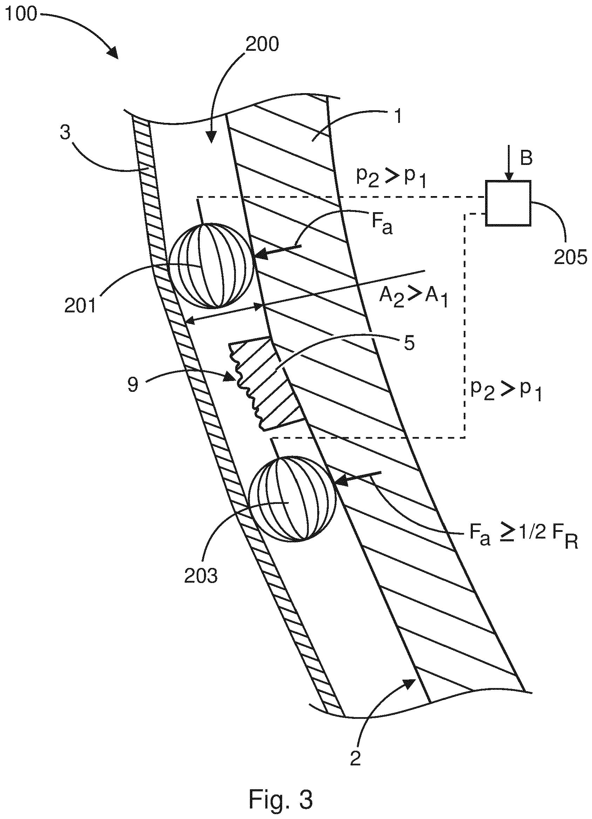

In Fig. 3 sind die beiden Abhebewerkzeuge 201, 203 der Abhebewerkzeuganordnung 200 mit einem Druck p₂ beaufschlagt, der größer ist als der Druck p₁ gemäß Fig. 2. Ihr Volumen hat sich entsprechend vergrößert, und p₂ ist derart angestiegen, dass das Spannelement 3 einen zweiten Abstand A₂ relativ zum Turm 1 eingenommen hat, der größer ist als der erste Abstand A₁.

Dies wurde erreicht, indem mittels des Steuergeräts 205 ein entsprechender Steuerbefehl B erteilt wurde. Solange der Druck p₂ gehalten wird, bleibt das Spannelement 3, welches weiterhin unter Zugspannung steht im Wartungsbereich 7 von dem Wartungsobjekt 5 beabstandet.

Das Wartungsobjekt 5 hat auf der dem Spannelement 3 zugewandten Seite einen Schaden 9. Durch das Abheben des Spannelements 3 von der Turmwand 2 kann nun eine Wartungsarbeit im Wartungsbereich 7 durchgeführt werden, ohne dass das Spannelement 3 noch entspannt werden muss, denn das Wartungsobjekt 5 ist bereits zugänglich.

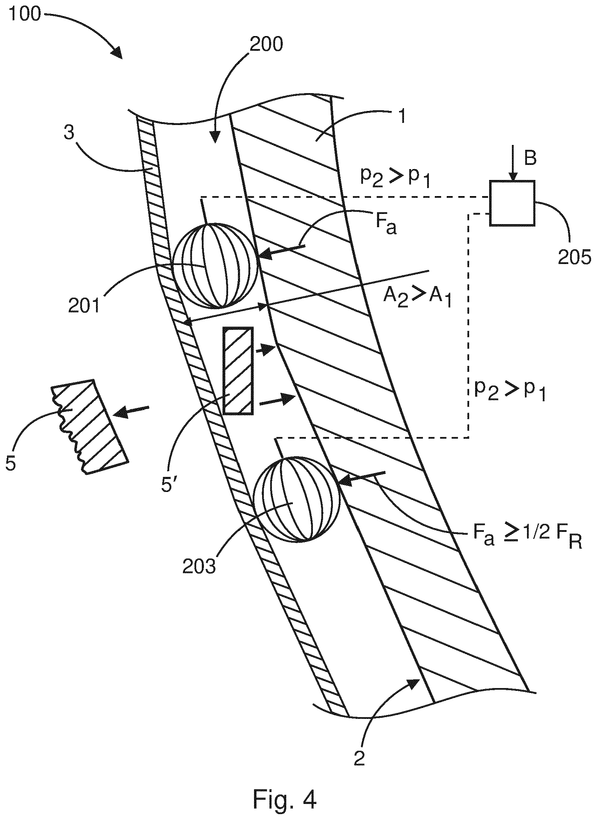

Im Zustand gemäß Fig. 4 ist bei unveränderter Position des Spannelements 3 relativ zum Turm 1 das Wartungsobjekt 5 aus dem Wartungsbereich 7 entfernt worden und ein Austauschobjekt 5`, beispielsweise ein neuer Umlenksattel, kann an der vorgesehenen Stelle im Wartungsbereich 7 eingesetzt werden. All dies kann geschehen, während das Spannelement 3 nach wie vor unter Zugspannung steht.

Nach erfolgtem Austausch kann das Spannelement 3 an das Austauschobjekt 5`, welches dann das neue Wartungsobjekt ist, durch Reduzieren des Fluiddrucks und damit Volumens in den Abhebewerkzeugen 201, 203 wieder angelegt werden, und es kann sukzessive der Zustand wie in Fig. 1 gezeigt wieder hergestellt werden.

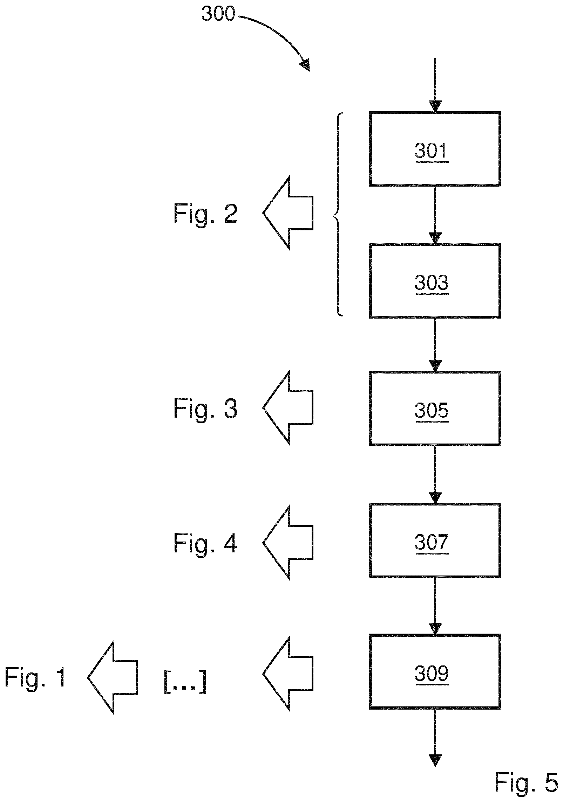

Fig. 5 stellt schematisch den Verfahrensablauf 300 des bevorzugten Ausführungsbeispiels der Erfindung dar. In einem ersten Schritt 301 wird die Abhebewerkzeuganordnung 200 bereitgestellt, die dazu eingerichtet ist, das Spannelement 3 in dem Wartungsbereich 7 relativ zu der Wand 2 des Turms 1 zu bewegen, während das Spannelement 3 unter Zugspannung steht.

In Schritt 303 wir die Abhebewerkzeuganordnung 200 in dem Wartungsbereich 7 an dem Spannelement 3 angesetzt, wobei das Spannelement 3 einen ersten Abstand A₁ relativ zur Wand 2 des Turms 1 einnimmt.

Die Schritte 301 und 303 sind in Fig. 2 illustriert.

In Schritt 305 wird das Spannelement 3 von der Wand 2 des Turms 1 mittels der Abhebewerkezuganordnung 200 fortbewegt, so dass das Spannelement 3 einen den zweiten Abstand A₂ relativ zur Wand 2 des Turms 1 einnimmt, der größer ist als der erste Abstand A₁. Dieser Zustand ist in Fig. 3 illustriert.

In Schritt 307 wird die Wartungsarbeit im Wartungsbereich 7 durchgeführt, während die Abhebewerkzeuganordnung 200 das Spannelement 3 in dem zweiten Abstand A₂ hält. Der Schritt 307 umfasst vorzugsweise das Inspizieren, Instandsetzen und/oder Austauschen des Wartungsobjekts, abhängig vom jeweiligen Anwendungsfall. Im vorliegenden Ausführungsbeispiel, in dem das Wartungsobjekt 5 ein Umlenksattel ist, umfasst Schritt 307 vorzugsweise das Inspizieren und Austauschen des Wartungsobjekts 5.

Nach der Durchführung der Wartungsarbeit in Schritt 307 erfolgt im Schritt 309 das Zurückbewegen des Spannelements 3 in den ersten Abstand A₁ zur Wand 2 des Turms 1 mittels der Abhebewerkzeuganordnung 200.

Schritt 307 des Verfahrens ist in Fig. 4 illustriert, während die in Schritt 9 definierte Rückabwicklung das Spannelement 3 im Turm 1 der Windenergieanlage 100 über die Zustände der Figuren 4 und 3 zurück in die Zustände der Figur 2 und schlussendlich Figur 1 überführt.

Im Schritt 303 erfolgt das Ansetzen der Abhebewerkzeuganordnung vorzugsweise dergestalt, dass das erste Abhebewerkzeug 201 auf einer ersten Seite des Wartungsobjekts 5 angesetzt wird, sowie das zweite Abhebewerkzeug 203 auf einer zu der ersten Seite gegenüberliegenden zweiten Seite des Wartungsobjekts 5 angesetzt wird.

Die Inspektion des Wartungsobjekts 5 in Schritt 307 umfasst vorzugsweise das Überprüfen des Wartungsobjekts 5 auf unzulässige Deformationen oder das Vorhandensein von Schäden, und/oder den Austausch des Wartungsobjekts 5 im Falle eines festgestellten Schadens.

Das Verfahren ist aber genauso anwendbar, wenn andere Elemente als ein Umlenksattel oder dergleichen die Rolle des Wartungsobjekts 5 einnehmen. Wenn das Wartungsobjekt 5 beispielsweise ein Schutzmantel des Spannelements 3 selber ist, umfasst der Schritt 307 vorzugsweise das Inspizieren und/oder Instandsetzen des Schutzmantels, wobei vorzugsweise das Inspizieren ein Überprüfen des Schutzmantels des Spannelements 3 auf schadhafte Stellen umfasst, und/oder im Falle der Identifikation einer solchen schadhaften Stelle die Versiegelung der schadhaften Stelle.

Wenn beispielweise das Wartungsobjekt 5 eine Korrosionsschutzfüllung des Spannelements 3 ist, umfasst Schritt 307 vorzugsweise das Inspizieren und/oder Instandsetzen der Korrosionsschutzfüllung, wobei vorzugsweise der Schritt des Inspizierens eine Überprüfung des Spannelements 3 auf Austritt der Korrosionsschutzfüllung umfasst, und/oder der Schritt des Instandsetzens ein Auffüllen der Korrosionsschutzfüllung umfasst. Vorzugsweise wird im Anschluss an das Auffüllender Korrosionsschutzfüllung auch die Oberfläche des Wartungsobjekts, also der Schutzmantel, an der Stelle des Korrosionsschutzfüllung-Austritts versiegelt.

Die Abhebewerkzeuge 201, 203 im erfindungsgemäßen Verfahren 300 sind vorzugsweise pneumatische Hebekissen, und der Schritt 305 umfasst ein Befüllen des Abhebewerkezugs 201, 203 mit Druckluft, so dass sich das Spannelement 3 vom ersten Abstand A₁ bis zum zweiten Abstand A₂ von der Wand 2 des Turms 1 entfernt.

Alternativ oder zusätzlich umfasst der Schritt 309 das Entleeren des Abhebewerkzeugs 201, 203, so dass das Spannelement 3 sich wieder dem ersten Abstand A₁ annähert, bzw. diesen auch erreicht.

Die Verwendung von Hebekissen zum Abheben des Spannelements 3 von der Wand 2 des Turms 1 ist deswegen vorteilhaft, weil diese Hebekissen im drucklosen Zustand bzw. bei ihrem ersten Druck p₁, sehr flach sind und auch noch in enge Spalte zwischen dem Spannelement 3 und der Wand 2 des Turms 1 eingeführt werden können, aber gleichzeitig einen hohen maximalen Hub aufweisen.

Bei Konstruktionen, die von der hier schematisch gezeigten Variante abweichen, bei denen beispielsweise die Spannelemente an Konsolbändern oder ähnlichen tragenden Vorsprüngen an der Wand 2 des Turms 1 geführt werden, können aufgrund eines höheren Grundabstands zwischen Spannelement und Turmwand auch andere Abhebewerkzeuganordnungen verwendet werden, bei denen beispielsweise hydraulisch betätigte Hubzylinder oder mechanisch betätigte Abhebewerkzeuge zum Einsatz kommen. Auch diese Varianten haben mit dem gezeigten Ausführungsbeispiel gemein, dass das Spannelement aus einem ersten Abstand A₁ in einen weiter beabstandeten zweiten Abstand A₂ verbracht wird, während das Spannelement 3 unter Zugspannung steht, um das Spannelement 3 vom Wartungsobjekt 5 im Wartungsbereich 7 abzuheben.

Die Erfindung findet erfindungsgemäß besonders vorteilhaft in Windenergieanalagen Verwendung, in denen der Turm ein Betonturm ist, und bei denen das Spannelement Teil eines externen Litzenspannsystems ist.

### Bezugszeichenliste:

- 1: Turm
- 2: Wand
- 3: Spannelement
- 5: Wartungsobjekt
- 5': Austauschobjekt
- 7: Wartungsbereich
- 9: Schaden
- 100: Windenergieanlage
- 200: Abhebewerkzeuganordnung
- 201, 203: Abhebewerkzeug
- 205: Steuergerät
- 300: Verfahren
- 301: Schritt
- 303: Schritt
- 305: Schritt
- 307: Schritt
- 309: Schritt
- A₁, A₂: Abstand
- B: Steuerbefehl
- F_{R}: Kraft
- Fs: Spannkraft
- L₁, L₂: Abstand
- p₁, p₂: Druck

## Patentansprüche

1. Verfahren (300) zum Durchführen von Wartungsarbeiten im Inneren eines Turms (1) einer Windenergieanlage, wobei der Turm (1) eine Turmwand (2) aufweist, und mindestens ein innen an der Turmwand (2) entlang verlaufendes, unter Zugspannung stehendes Spannelement (3) aufweist, umfassend die Schritte:
Bereitstellen (301) einer Abhebewerkzeuganordnung (200), die dazu eingerichtet ist, das Spannelement (3) in einem Wartungsbereich (7) relativ zu der Turmwand (2) zu bewegen und,
während das Spannelement (3) unter Zugspannung steht:
a) Ansetzen (303) der Abhebewerkzeuganordnung (200) in dem Wartungsbereich (7) an dem Spannelement (3), wobei das Spannelement (3) einen ersten Abstand (A₁) relativ zur Turmwand (2) einnimmt,
b) Fortbewegen (305) des Spannelements von der Turmwand (2) mittels der Abhebewerkzeuganordnung (200), so dass das Spannelement (3) einen zweiten Abstand (A₂) relativ zur Turmwand (2) einnimmt, der größer ist als der erste Abstand (A₁),
c) Durchführen (307) der Wartungsarbeit im Wartungsbereich (7), während die Abhebewerkzeuganordnung (200) das Spannelement (3) in dem zweiten Abstand (A₂) hält, und
d) Zurückbewegen (309) des Spannelements (3) in den ersten Abstand (A₁) zu der Turmwand (2) mittels der Abhebewerkzeuganordnung (200) im Anschluss an die Wartungsarbeit.

2. Verfahren (300) nach Anspruch 1,
wobei die Abhebewerkzeuganordnung (200) ein erstes Abhebewerkzeug (201) und ein zweites Abhebewerkzeug (203) aufweist, sich der Wartungsbereich (7) um ein Wartungsobjekt (5) herum erstreckt, und der Schritt a) ferner umfasst:
- Ansetzen des ersten Abhebewerkzeugs (201) auf einer ersten Seite des Wartungsobjekts (5), sowie Ansetzen des zweiten Abhebewerkzeugs (203) auf einer zu der ersten Seite gegenüberliegenden zweiten Seite des Wartungsobjekts (5).

3. Verfahren (300) nach Anspruch 2,
wobei das erste Abhebewerkzeug (201) und das zweite Abhebewerkzeug (203) jeweils einen Abstand (L₁,L₂) zu dem Wartungsobjekt (5) aufweisen, vorzugsweise 20 cm oder mehr, weiter bevorzugt 30 cm oder mehr, besonders bevorzugt 35 cm bis 45 cm.

4. Verfahren (300) nach einem der vorstehenden Ansprüche,
wobei das Wartungsobjekt (5) eine Unterkonstruktion, insbesondere ein Umlenkelement wie etwa einen Umlenksattel, für das Spannelement (3) ist, an welchem das Spannelement (3) in dem ersten Abstand anliegt, und von dem das Spannelement (3) im zweiten Abstand (A₂) abgehoben ist, wobei Schritt c) das Inspizieren, Instandsetzen und/oder Austauschen des Wartungsobjekts (5) umfasst.

5. Verfahren (300) nach Anspruch 4,
wobei der Schritt c) umfasst:
Überprüfung des Wartungsobjekts (5) auf Verformung und Vorhandensein von Schäden, und/oder
Austausch des Wartungsobjekts (5) im Fall eines Schadens.

6. Verfahren (300) nach einem der vorstehenden Ansprüche,
wobei das Wartungsobjekt (5) ein Schutzmantel des Spannelements (3) ist, und der Schritt c) umfasst: Inspizieren und/oder Instandsetzen des Schutzmantels (3) umfasst,
wobei vorzugsweise das Inspizieren umfasst: Überprüfung des Schutzmantels des Spannelements (3) auf schadhafte Stellen, und/oder das Instandsetzen im Fall der Identifikation umfasst: Versiegelung der schadhaften Stelle.

7. Verfahren (300) nach einem der vorstehenden Ansprüche,
wobei das Wartungsobjekt (5) eine Korrosionsschutzfüllung des Spannelements (3) ist, wobei Schritt c) umfasst: Inspizieren und/oder Instandsetzen der Korrosionsschutzfüllung, wobei vorzugsweise der Schritt des Inspizierens umfasst: Überprüfung des Spannelements (3) auf Austritt der Korrosionsschutzfüllung, und/oder der Schritt des Instandsetzens umfasst: Auffüllen der Korrosionsschutzfüllung.

8. Verfahren (300) nach einem der vorstehenden Ansprüchen,
wobei das Abhebewerkzeug (201, 203), insbesondere das erste und/oder zweite Abhebewerkzeug, ein druckbeaufschlagbares Fluidkissen aufweist, welches dazu eingerichtet ist, mittels Druckbeaufschlagung in einen partiell oder vollständig entleerten ersten Zustand; und einen partiell oder vollständig befüllten zweiten Zustand gebracht zu werden.

9. Verfahren (300) nach Anspruch 8,
wobei Schritt b) umfasst:
Befüllen des Fluidkissens, so dass sich das Spannelement (3) dem zweiten Abstand (A₂) annähert, und/oder wobei Schritt d) umfasst:
Entleeren des Fluidkissens, so dass das Spannelement (3) sich wieder dem ersten Abstand annähert.

10. Verfahren (300) nach einem der vorstehenden Ansprüche,
wobei das Fluidkissen ein pneumatisches Hebekissen ist, vorzugsweise mit einer Einschubhöhe im ersten Zustand von 3 cm oder weniger, und/oder mit einem maximalen Hub in einem Bereich von 20 cm oder mehr, vorzugsweise 50cm oder mehr.

11. Verfahren (300) nach einem der Ansprüche 1 bis 7,
wobei das Spannelement (3) mittels eines oder mehrerer an der Turmwand (2) angeordneter tragender Vorsprünge in einem Abstand zur Turmwand (2) geführt ist, der in einem Bereich von 20 cm oder mehr liegt, vorzugsweise 30 cm bis 50 cm, weiter bevorzugt 50 cm oder mehr, , und wobei das Abhebewerkzeug ein hydraulisch betätigter Hubzylinder oder ein mechanisch betätigtes Werkzeug ist.

12. Verfahren (300) nach einem der vorstehenden Ansprüche,
wobei der Turm (1) ein Betonturm ist, und das Spannelement (3) Teil eines externen Spannsystems ist.

13. Verwendung eines pneumatischen Hebekissens als Abhebewerkzeug (201, 203) in einer Abhebewerkzeuganordnung (200) zum Durchführen von Wartungsarbeiten im Inneren eines Turms (1) einer Windenergieanlage (100), wobei der Turm (1) eine Turmwand (2) und mindestens ein innen an der Turmwand (2) entlang verlaufendes, unter Zugspannung stehendes Spannelement (3) aufweist, um das Spannelement (3) in einem Wartungsbereich (7) von einem ersten Abstand (A₁) relativ zu der Turmwand (2) in einen zweiten Abstand (A₂) von der Turmwand (2) zu bringen, der größer ist als der erste Abstand (A₁), während das Spannelement (3) unter Zugspannnung steht.

14. Verwendung nach Anspruch 13,
wobei das pneumatische Hebekissen in einem Verfahren (300) nach einem der Ansprüche 1 bis 12 verwendet wird.
